# FASCICULE DE BREVET EUROPEEN

(11) **EP 3 301 348 B1**
(45) Date de publication et mention de la délivrance du brevet: **01.04.2020**
(21) Numéro de dépôt: 17192634.8
(22) Date de dépôt: 22.09.2017
(51) Int. Cl.: F21S 41/143, F21S 41/24

(54) **DISPOSITIF D'ÉCLAIRAGE EN BANDES POUR PROJECTEUR DE VÉHICULE AUTOMOBILE**
BANDFÖRMIGE BELEUCHTUNGSVORRICHTUNG FÜR KRAFTFAHRZEUGSCHEINWERFER
LIGHTING DEVICE IN STRIPS FOR MOTOR VEHICLE HEADLIGHT

(30) Priorité: 29.09.2016 FR 1659375
(43) Date de publication de la demande: 04.04.2018
(73) Titulaire: Valeo Vision, 93012 Bobigny Cedex (FR)
(72) Inventeur: DE LAMBERTERIE, Antoine, 93012 BOBIGNY Cedex (FR); GROMFELD, Yves, 49000 ANGERS (FR)
(74) Mandataire: Valeo Vision

(56) Documents cités:
- EP-A1- 2 743 567
- EP-A1- 2 871 406
- WO-A1-2016/050983

## Description

### Domaine technique

L'invention a trait au domaine des dispositifs d'éclairage, notamment pour projecteurs de véhicule automobile. L'invention traite également d'un bloc optique de projecteur pour véhicule automobile muni d'un dispositif d'éclairage selon l'invention.

### Technique antérieure

Un véhicule automobile est équipé de projecteurs, ou phares, destinés à illuminer la route devant le véhicule, la nuit ou en cas de luminosité réduite. Ces projecteurs peuvent généralement être utilisés selon deux modes d'éclairage : un premier mode " feux de route " et un deuxième mode " feux de croisement ". Le mode " feux de route " permet d'éclairer fortement la route loin devant le véhicule. Le mode " feux de croisement " procure un éclairage plus limité de la route, mais offrant néanmoins une bonne visibilité, sans éblouir les autres usagers de la route. Ces deux modes d'éclairage sont complémentaires. Le conducteur du véhicule doit manuellement changer de mode en fonction des circonstances, au risque d'éblouir par inadvertance un autre usager de la route. En pratique, le fait de changer de mode d'éclairage de façon manuelle peut manquer de fiabilité et s'avérer parfois dangereux. En outre, le mode feux de croisement procure une visibilité parfois insatisfaisante pour le conducteur du véhicule.

Pour améliorer la situation, des projecteurs dotés d'une fonction ADB (Adaptive Driving Beam) d'éclairage adaptatif ont été proposés. Une telle fonction ADB est destinée à détecter de façon automatique un usager de la route susceptible d'être ébloui par un faisceau d'éclairage émis en mode feux de route par un projecteur, et à modifier le contour de ce faisceau d'éclairage de manière à créer une zone d'ombre à l'endroit où se trouve l'usager détecté. Les avantages de la fonction ADB sont multiples : confort d'utilisation, meilleure visibilité par rapport à un éclairage en mode feux de croisement, meilleure fiabilité pour le changement de mode, risque d'éblouissement fortement réduit, conduite plus sûre.

Le document EP2743567A1 divulgue un projecteur de véhicule automobile doté de modules générant un éclairage en bandes au travers d'une lentille de projection. Chaque module comprend une série de guides de lumière permettant de mettre en forme des rayonnements issus de diodes électroluminescentes. Grâce à un tel projecteur, il est possible d'éclairer un environnement à l'aide des bandes lumineuses dont les positions sont maîtrisées. Toutefois, l'intégration d'un projecteur dans un véhicule donné impose une forme à la lentille de projection des modules d'éclairage. Celle-ci doit alors respecter une courbure, un galbe précis. Cette contrainte engendre des distorsions géométriques telles des aberrations de champ. Certaines bandes montrent alors des fluctuations d'intensités lumineuses, et éventuellement des zones sombres. La combinaison des bandes devient inadaptée à un éclairage automobile, et nuit à la sécurité de conduite du véhicule en raison des hétérogénéités. Le document WO 2016/050983 A1 divulgue un dispositif d'éclairage selon le préambule de la revendication 1.

### Résumé de l'invention

### Problème technique

L'invention a pour objectif de résoudre au moins un des problèmes posés par l'art antérieur. Plus précisément, l'invention a pour objectif de réduire les aberrations de champs d'un dispositif d'éclairage en bandes pour projecteur. L'invention a également pour objectif de réduire les distorsions géométriques d'un tel dispositif d'éclairage malgré des contraintes géométriques externes, notamment une courbure de la lentille de projection.

### Solution technique

L'invention a pour objet un dispositif d'éclairage en bandes pour projecteur de véhicule automobile comprenant : un élément optique primaire muni de moyens de formation de pixels destiné à coopérer avec une source de lumière primaire, et d'un dioptre de sortie ; une lentille de projection ; le dispositif étant configuré de sorte à projeter de la lumière entrant dans les moyens de formation de pixels et sortant par la lentille de projection sous la forme d'un pixel lumineux, telle une bande lumineuse ; le dispositif comprenant en outre une lentille intermédiaire qui est disposée entre le dioptre de sortie de l'élément optique primaire et la lentille de projection, et qui est configurée de sorte à concentrer le rayonnement issu du dioptre de sortie de l'élément optique primaire sur la lentille de projection.

Selon un mode avantageux de l'invention, le dioptre de sortie de l'élément optique primaire est généralement sphérique, et les moyens de formation de pixels comprennent au moins un guide de lumière présentant un profil rectangulaire transversalement à la direction d'éclairage du dispositif.

Selon un mode avantageux de l'invention, dans le sens normal de montage la lentille intermédiaire comprend un dioptre d'entrée avec un profil convexe selon un plan horizontal, et éventuellement un profil concave selon un plan vertical.

Selon un mode avantageux de l'invention, dans le sens normal de montage la lentille intermédiaire comprend un dioptre de sortie avec un profil convexe selon un plan vertical, et éventuellement selon un plan horizontal.

Selon l'invention, dans le sens normal de montage la lentille intermédiaire comprend un foyer réel et est aussi haute ou plus haute que la lentille de projection, ou la lentille intermédiaire comprend un foyer virtuel et est moins haute que la lentille de projection.

Selon un mode avantageux de l'invention, l'élément optique primaire comprend plusieurs guides de lumière, chacun destiné à coopérer avec une source de lumière primaire, le dispositif étant configuré de sorte à projeter plusieurs pixels lumineux, notamment plusieurs bandes lumineuses parallèles, qui correspondent chacun(e) à l'une des sources de lumière primaires.

Selon un mode avantageux de l'invention, le dispositif comprend au moins une source de lumière primaire, notamment une diode électroluminescente et/ou un laser, chaque source étant associée à un guide de lumière.

Selon un mode avantageux de l'invention, suivant un plan vertical dans le sens normal de montage, la lentille de projection comprend un dioptre d'entrée avec un profil concave ou plan et un dioptre de sortie avec un profil convexe.

Selon un mode avantageux de l'invention, suivant un plan vertical dans le sens normal de montage, la lentille de projection présente un profil de lentille divergente.

Selon un mode avantageux de l'invention, le dispositif comprend plusieurs éléments optiques primaires et plusieurs lentilles intermédiaires, chacune associée à un élément optique primaire et disposée entre la lentille de projection et un élément optique primaire associé, la lentille de projection présentant un dioptre de sortie continu le long des lentilles intermédiaires.

Selon un mode avantageux de l'invention, selon un plan horizontal dans le sens normal de montage, l'association d'un élément optique primaire et d'une lentille intermédiaire forme un module avec un axe optique, le dispositif comprend au moins trois modules consécutifs dont les axes optiques sont inclinés par rapport à la normale au dioptre de sortie de la lentille de projection, respectivement, d'un angle β compris entre -2° et -15°, d'un angle β égal à 0°, d'un angle β compris entre 2° et 10°.

Selon un mode avantageux de l'invention, selon un plan horizontal dans le sens normal de montage, l'association d'un élément optique primaire (6) et d'une lentille intermédiaire forme un module avec un axe optique, le dispositif comprend au moins trois modules consécutifs dont les axes optiques sont inclinés par rapport à la normale au dioptre de sortie de la lentille de projection, respectivement, d'un angle β égal à 0°, d'un angle β compris entre 2° et 10°, et d'un angle β compris entre 5° et 18°.

Selon un mode avantageux de l'invention, suivant un plan vertical dans le sens normal de montage, la lentille de sortie présente un allongement principal selon un axe principal qui est incliné de 0 à 10° par rapport à la direction horizontale, éventuellement l'inclination entre l'axe principal et la direction horizontale est de 5°. Le plan vertical est le plan YZ défini dans un repère orthonormé ou l'axe X est l'axe de projection.

Selon un mode avantageux de l'invention, le dispositif comprend au moins trois éléments optiques primaires chacun dotés de moyens de formation de pixels, selon un plan horizontal dans le sens normal de montage le dioptre de sortie de la lentille de projection présente une courbure convexe de rayon de courbure inférieur à 400 mm, préférentiellement inférieur ou égal à 150mm.

Selon un mode avantageux de l'invention, selon un plan horizontal dans le sens normal de montage, le dioptre de sortie de la lentille de projection présente une courbure, l'épaisseur de la lentille de projection diminue dans le sens inverse au sens de projection.

Selon un mode avantageux de l'invention, selon un plan horizontal dans le sens normal de montage, l'inclinaison α entre la normale au dioptre de sortie de la lentille de projection et la direction de projection augmente en direction d'au moins une extrémité de la lentille de projection.

Selon un mode avantageux de l'invention, la lentille de projection comprend un dioptre d'entrée avec une surface torique concave et un dioptre de sortie avec une surface torique convexe ou plane.

Selon un mode avantageux de l'invention, selon un plan vertical dans le sens normal de montage, la lentille de projection forme un ruban de matière, éventuellement avec des bords parallèles.

Selon un mode avantageux de l'invention, selon un plan horizontal dans le sens normal de montage, la lentille de projection est généralement inclinée par rapport à la direction de projection et présente une diminution d'épaisseur dans le sens opposé au sens de projection.

Selon un plan vertical dans le sens normal de montage la lentille de projection peut présenter un dioptre d'entrée avec profil dont le rayon de courbure est inférieur au rayon de courbure du profil de son dioptre de sortie.

L'invention a également pour objet un bloc optique de projecteur de véhicule automobile comprenant un dispositif d'éclairage en bandes, remarquable en ce que ledit dispositif d'éclairage en bandes est conforme à l'invention.

### Avantages apportés

L'invention permet de corriger les aberrations de champ. Elle permet de compenser les variations géométriques à l'aide d'une lentille additionnelle. La correction que doit apporter la lentille de projection est allégée. Ainsi, l'homogénéité et la netteté des bandes produites sont contrôlées en dépit de formes singulièrement galbées de lentille de projection. Un dispositif d'éclairage en bandes pour projecteur de véhicule selon l'invention offrira d'avantage de sécurité de conduite.

### Brève description des dessins

La figure 1 représente une vue isométrique arrière d'un dispositif d'éclairage en bandes selon l'invention.
La figure 2 illustre une vue de côté d'un dispositif d'éclairage selon l'invention.
La figure 3 esquisse une vue du dessus d'un dispositif d'éclairage selon l'invention.
La figure 4 est une représentation des courbes isolux de pixels produits les sources lumineuses d'un élément optique primaire d'un dispositif d'éclairage en bandes selon l'invention.

### Description des modes de réalisation

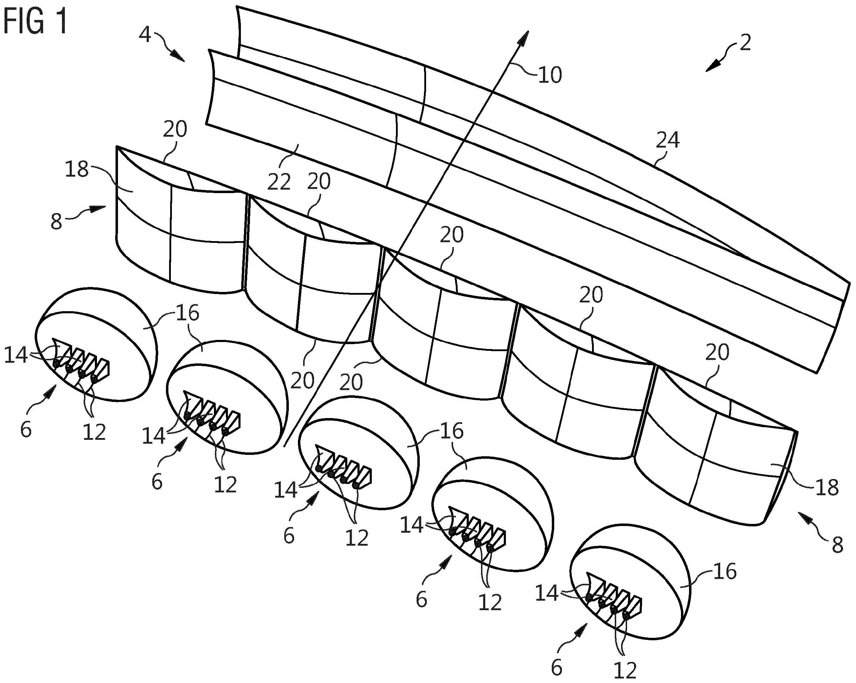

La figure 1 représente de manière simplifiée un dispositif d'éclairage 2 selon l'invention. Le dispositif est généralement représenté selon le sens d'éclairage. Le dispositif est en partie représenté via ses dioptres.

Le dispositif 2 comprend, selon le sens d'éclairage, des modules d'éclairage, en l'occurrence cinq, et une lentille de projection 4. Chaque module d'éclairage comprend un élément optique primaire 6 et une lentille intermédiaire 8, cette dernière étant disposée entre la lentille de projection 4 et l'élément optique primaire 6 associé. Le dispositif comprend un axe optique 10 selon lequel il éclaire, selon lequel il concentre et rabat généralement ses rayons.

Le dispositif 2 peut en outre comprendre au moins une source lumineuse 12, telle une diode électroluminescente ou un laser, qui produit des rayons lumineux pénétrant dans le dispositif via l'élément optique primaire. Ici, vingt sources lumineuses 12 sont prévues pour créer un éclairage en bandes. Le dispositif 2 peut encore comprendre un boîtier qui n'est pas représenté par soucis de clarté.

Sur sa face d'entrée, chaque élément optique primaire 6 comprend des moyens de formation de pixels. Lesdits moyens comportent au moins un guide de lumière 14, quatre dans le cas présent, et un corps avec un dioptre de sortie 16 courbe. Les des moyens de formation de pixels peuvent également comprendre des microlentilles ou des coussinets. Chaque lentille intermédiaire 8 comprend des dioptres d'entrée 18 et de sortie 20 courbes. Elles peuvent chacune avoir des formes toriques, c'est-à-dire des surfaces générées par la rotation d'un cercle autour d'un axe distant du cercle. Les dioptres d'entrées 18 des lentilles intermédiaires 8 font face aux éléments optiques primaires 6. L'ensemble des lentilles intermédiaires 8 forme une rangée généralement courbe. Puisque les lentilles intermédiaires 8 peuvent être espacées les unes des autres, des caches (non représentés) peuvent être prévus à leurs jonctions pour éviter les rayonnements parasites.

La lentille de projection 4 comprend un dioptre d'entrée 22 en regard des lentilles intermédiaires 8, et un dioptre de sortie 24. Chacun de ses dioptres est continu et peut être une surface généralement torique. La lentille de projection 4 forme un ruban de matière continu, dont l'épaisseur varie d'une extrémité à l'autre. L'épaisseur maximale peut être observée à distance des extrémités selon la longueur.

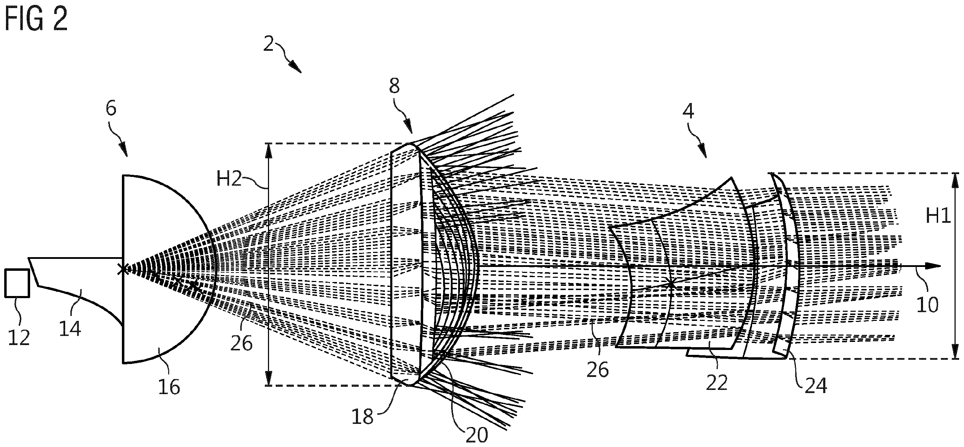

La figure 2 est une vue de profil du dispositif lumineux dans le sens normal de montage du dispositif sur un véhicule. Une source lumineuse, un élément optique primaire, une lentille intermédiaire et une lentille de projection sont représentés.

Le corps de l'élément optique primaire forme une portion de correction avec une surface 16 en dôme, par exemple hémisphérique. Chaque guide de lumière 14, également appelé guide d'onde ou guide d'optique, est associé à une source de lumière primaire 12, il conduit la lumière à travers de la matière de l'élément. Il présente un allongement, éventuellement principal, le long de l'axe optique 10 du dispositif 2. Le matériau constituant les guides de lumière 14 et le corps est transparent. Il s'agit ici d'un matériau pour lentille optique, tel qu'un matériau organique ou éventuellement du verre et est venu de matière. Un tel élément optique est bien connu de l'homme du métier et peut être réalisé tel que décrit dans le document EP2743567A1.

Dans un plan vertical, le rayonnement 26 issu de l'élément optique primaire 6 diverge. La lentille intermédiaire 8 intercepte ce rayonnement 26 divergent et le rabat en le concentrant sur la lentille de projection 4. Elle répartit verticalement le rayonnement 26 issu de l'élément optique primaire 6 sur la hauteur de la lentille de projection 4, préférentiellement sur toute la hauteur.

En coupe dans un plan vertical, la lentille intermédiaire 8 présente un dioptre d'entrée 18 avec un profil sensiblement convexe, ou alternativement droit. Le dioptre de sortie 20 de la lentille intermédiaire 8 présente ici un profil concave. Le profil vertical de la lentille intermédiaire 8 agit comme une lentille convergente, qui ramène les rayons issus de l'élément optique primaire le long de l'axe optique 10, en réduisant l'inclinaison des rayons par rapport à l'axe optique. De la sorte, la déviation verticale que la lentille intermédiaire 8 doit assurer est réduite, ce qui simplifie son travail. Le profil vertical de la lentille intermédiaire pourrait également être celui d'une lentille divergente La lentille intermédiaire 8 agit comme une barrière pour les rayons primaires, sa hauteur H2 est supérieure à la hauteur H1 de la lentille de projection 4.

Dans un plan vertical, la lentille de projection 4 présente un dioptre d'entrée 22 avec un profil concave et dioptre de sortie 24 avec un profil convexe. Le rayon de courbure en entrée est inférieur au rayon de courbure en sortie, de sorte que le profil vertical de la lentille de projection 4 agit telle une lentille divergente.

Dans un plan vertical, les rayons issus de la lentille de projection 4 sont généralement parallèles, et sensiblement inclinés. Ils peuvent être inclinés de -2° à +8° par rapport à l'axe horizontal, le sens positif étant vers le dessus.

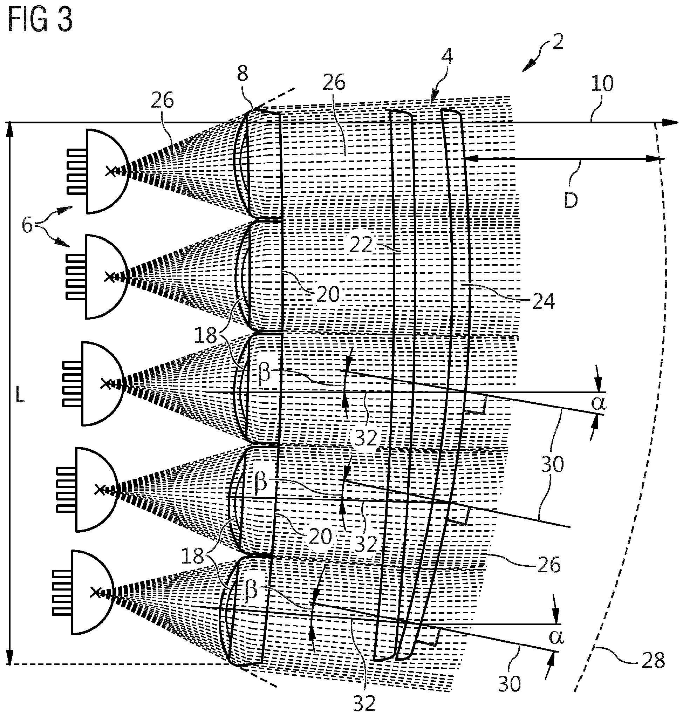

La figure 3 représente une vue du dessus d'un dispositif d'éclairage 2 dans le sens normal de montage du dispositif sur un véhicule. A titre d'exemple, il peut s'agir d'un dispositif d'éclairage 2 avant droit d'un véhicule automobile.

Dans un plan horizontal, chaque lentille intermédiaire 8 présente un dioptre d'entrée 18 et un dioptre de sortie 20 convexes, le dioptre d'entrée 18 étant plus fortement bombé. Les dioptres varient d'une lentille intermédiaire 8 à l'autre afin de s'adapter à l'inclinaison, aux courbures de la portion de lentille de projection 4 avec laquelle chaque lentille intermédiaire 8 travaille. Le dioptre de sortie 20 de chaque lentille intermédiaire 8 est sensiblement courbe, il peut être essentiellement droit.

Dans un plan horizontal, le rayonnement 26 issu de chaque élément optique primaire 6 diverge. Chaque lentille intermédiaire 8 intercepte le rayonnement 26 divergent d'un élément optique primaire 6 et le dévie en le focalisant sur une partie associée de la lentille de projection 4. Chaque lentille intermédiaire 8 réparti horizontalement le rayonnement 26 issu de l'élément optique primaire 6 sur une zone dédiée de la lentille de projection. En sortie des lentilles intermédiaires, les rayons sont généralement parallèles.

Les éléments optiques primaires 6 sont décalés les uns par rapport aux autres selon la direction générale de projection. Ils suivent la courbure du dioptre d'entrée 22 de la lentille de projection 4. Le dioptre d'entrée 22 de la lentille de projection 4 est essentiellement courbe, et éventuellement lisse, sa surface peut également présenter une courbure monotone. Le dioptre de sortie 24 de la lentille de projection 4 est courbe, éventuellement selon une courbure monotone.

La ligne 28 des foyers secondaires de la lentille de projection 4 est à une distance D similaire à sa longueur L. Le rapport entre la distance D et la longueur est compris entre 0,5 et 2 ; préférentiellement compris entre 0,8 et 1,2. La distance D et la longueur L peuvent être égales à 20 cm.

Dans un plan horizontal, par exemple le plan médian, la direction normale au dioptre de sortie 24 de la lentille de projection 4 est inclinée d'un angle α par rapport aux rayons émis. L'angle α peut être nul en une zone centrale, et maximal à une extrémité de la lentille de projection 4. La lentille de projection 4 présente une épaisseur maximale dans la zone où l'angle α est nul, et une épaisseur minimale là où l'angle α est maximal.

Dans un plan horizontal, les axes optiques 32 de modules sont généralement inclinés d'un angle β par rapport à la direction normale 30 au dioptre de sortie 24. Cette inclinaison peut résulter de l'orientation et ou de la forme des lentilles intermédiaires 8. L'angle β varie d'un module à l'autre, et peut être nul pour le module du milieu d'une rangée de modules, ou le module vers le bord interne d'une rangé de module. Les modules voisins présentent des axes optiques 32 inclinés d'angle β de -2° et +10° respectivement. Le sens positif de l'angle β étant le sens horaire.

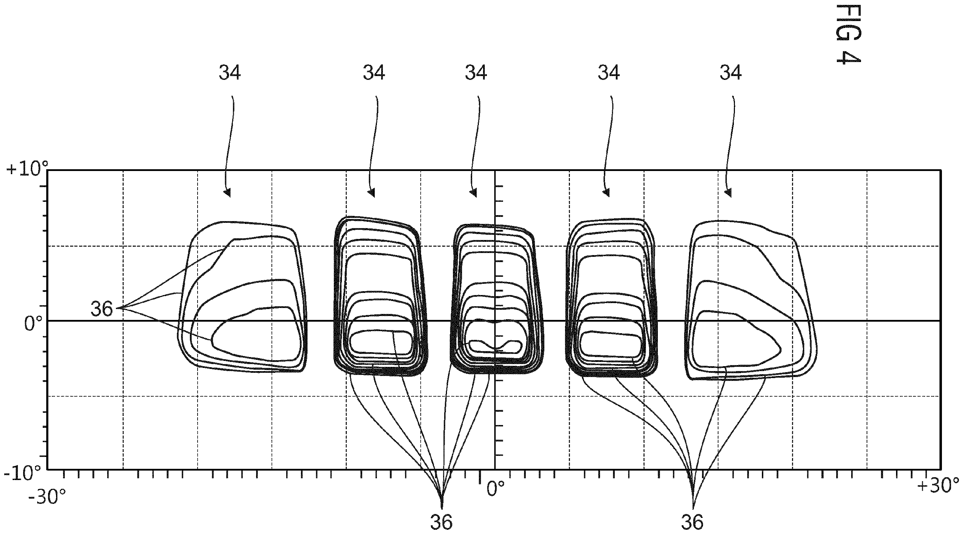

La figure 4 représente une simulation du rayonnement lumineux d'un élément optique primaire projeté sur un mur. Un repère orthonormé permet d'illustrer le champ éclairé grâce aux échelles.

Le rayonnement forme plusieurs pixels 34, en l'occurrence cinq, qui correspondent chacun à l'une des sources lumineuses d'un élément optique primaire en comportant cinq ; ce qui signifie que chaque pixel 34 correspond à une source lumineuse donnée. Chaque pixel 34 peut présenter une forme de bande, généralement rectangle. Les bandes peuvent présenter des bords verticaux et/ou horizontaux parallèles. Un tel éclairage peut présenter une zone centrale avec, par exemple au moins trois bandes similaires ; et éventuellement une zone latérale avec des bandes de moindre intensité.

Chaque bande est formée par un faisceau lumineux sensiblement divergent dont la largueur, selon l'axe horizontal, peut être comprise entre 1° et 2°. L'ensemble des bandes présente des coupures horizontales, ce qui favorise la concentration d'éclairage sur une hauteur donnée. Les bandes produites sont régulièrement décalées angulairement les unes des autres, ce qui peut faciliter un chevauchement avec des bandes d'un autre élément optique primaire du dispositif d'éclairage.

Au moins deux ou la majorité des pixels 34 peuvent présenter des courbes isolux 36 similaires. La configuration des courbes isolux 36 des différents pixels 34 peut être symétrique selon un plan vertical. Chaque courbe isolux 36 peut indiquer une augmentation d'intensité lumineuse comprise entre 25% et 100%, éventuellement entre 30% et 50%, par rapport à la courbe isolux 36 précédente. Les courbes isolux 36 des pixels 34 ont généralement des formes de rectangles, certaines courbes isolux 36 peuvent se superposer au niveau des bords verticaux des pixels 34. De même, certaines bandes isolux d'un pixel peuvent présenter des courbes isolux se chevauchant au niveau d'un bord inférieur. Ces caractéristiques traduisent l'aspect net et franc des bandes lumineuses. La majorité des pixels peuvent présenter une intensité lumineuse maximale égale ou similaire. Par similaire on peut entendre une différence inférieure à 25%, préférentiellement inférieure à 5%.

Les particularités de l'invention facilitent la superposition des bandes de lumière afin de générer un éclairage maîtrisé, tant au niveau de chaque élément optique primaire qu'au niveau du dispositif d'éclairage. Un tel rayonnement est particulièrement adapté pour éclairer un environnement dynamique d'un véhicule automobile en marche.

## Revendications

1. Dispositif d'éclairage (2) en bandes pour projecteur de véhicule automobile comprenant :
- un élément optique primaire (6) muni de moyens de formation (14) de pixels destiné à coopérer avec une source de lumière primaire (12), et d'un dioptre de sortie (16) ;
- une lentille de projection (4) ;
le dispositif (2) étant configuré de sorte à projeter de la lumière entrant dans les moyens de formation (14) de pixels et sortant par la lentille de projection (4) sous la forme d'un pixel lumineux (34), telle une bande lumineuse ;
le dispositif comprenant en outre une lentille intermédiaire (8) qui est disposée entre le dioptre de sortie (16) de l'élément optique primaire (6) et la lentille de projection (4), et qui est configurée de sorte à concentrer le rayonnement issu du dioptre de sortie (16) de l'élément optique primaire (8) sur la lentille de projection (4), le dispositif étant **caractérisé en ce que** la lentille intermédiaire, dans le sens normal de montage, comprend un foyer réel et est aussi haute ou plus haute que la lentille de projection (4), ou comprend un foyer virtuel et est moins haute que la lentille de projection (4).

2. Dispositif (2) selon la revendication 1, **caractérisé en ce que** le dioptre de sortie (16) de l'élément optique primaire (6) est généralement sphérique, et les moyens de formation de pixels comprennent au moins un guide de lumière (14) présentant un profil rectangulaire transversalement à la direction d'éclairage du dispositif (2).

3. Dispositif (2) selon l'une des revendications 1 à 2, **caractérisé en ce que** dans le sens normal de montage la lentille intermédiaire (8) comprend un dioptre d'entrée (18) avec un profil convexe selon un plan horizontal, et éventuellement un profil concave selon un plan vertical.

4. Dispositif (2) selon l'une des revendications 1 à 3, **caractérisé en ce que** dans le sens normal de montage la lentille intermédiaire (8) comprend un dioptre de sortie (20) avec un profil convexe selon un plan vertical, et éventuellement selon un plan horizontal.

5. Dispositif (2) selon l'une des revendications 1 à 4, **caractérisé en ce que** l'élément optique primaire (6) comprend plusieurs guides de lumière (14), chacun destiné à coopérer avec une source de lumière primaire (12), le dispositif (2) étant configuré de sorte à projeter plusieurs pixels lumineux (34), notamment plusieurs bandes lumineuses parallèles, qui correspondent chacun(e) à l'une des sources de lumière primaires (12).

6. Dispositif (2) selon la revendication 5, **caractérisé en ce qu'**il comprend au moins une source de lumière primaire (12), notamment une diode électroluminescente et/ou un laser, chaque source étant associée à un guide de lumière (14).

7. Dispositif (2) selon l'une des revendications 1 à 6, **caractérisé en ce que** selon un plan vertical dans le sens normal de montage, la lentille de projection (4) comprend un dioptre d'entrée (22) avec un profil concave ou plan et un dioptre de sortie (24) avec un profil convexe.

8. Dispositif (2) selon l'une des revendications 1 à 7, **caractérisé en ce que** selon un plan vertical dans le sens normal de montage, la lentille de projection (4) présente un profil de lentille divergente.

9. Dispositif (2) selon l'une des revendications 1 à 8, **caractérisé en ce qu'**il comprend plusieurs éléments optiques primaires (6) et plusieurs lentilles intermédiaires (4), chacune associée à un élément optique primaire (6) et disposée entre la lentille de projection (4) et un élément optique primaire associé, la lentille de projection présentant un dioptre de sortie continu le long des lentilles intermédiaires (8).

10. Dispositif (2) selon la revendication 9, **caractérisé en ce que** selon un plan horizontal dans le sens normal de montage, l'association d'un élément optique primaire (6) et d'une lentille intermédiaire (8) forme un module avec un axe optique (32), le dispositif (2) comprend au moins trois modules consécutifs dont les axes optiques (32) sont inclinés par rapport à la normale (30) au dioptre de sortie (24) de la lentille de projection (4), respectivement, d'un angle β compris entre -2° et -10°, d'un angle β égal à 0°, d'un angle β compris entre 2° et 10°.

11. Dispositif (2) selon la revendication 9, **caractérisé en ce que** selon un plan horizontal dans le sens normal de montage, l'association d'un élément optique primaire (6) et d'une lentille intermédiaire (8) forme un module avec un axe optique (32), le dispositif (2) comprend au moins trois modules consécutifs dont les axes optiques (32) sont inclinés par rapport à la normale (30) au dioptre de sortie (24) de la lentille de projection (4), respectivement, d'un angle β égal à 0°, d'un angle β compris entre 2° et 10°, et d'un angle β compris entre 5° et 18°.

12. Dispositif (2) selon l'une des revendications 9 à 11, **caractérisé en ce qu'**il comprend au moins trois éléments optiques primaires (6) chacun dotés de moyens de formation (14) de pixels, selon un plan horizontal dans le sens normal de montage le dioptre de sortie (24) de la lentille de projection (4) présente une courbure convexe de rayon de courbure inférieur à 400 mm, préférentiellement inférieur ou égal à 150 mm.

13. Dispositif (2) selon l'une des revendications 1 à 12, **caractérisé en ce que** selon un plan horizontal dans le sens normal de montage, le dioptre de sortie (24) de la lentille de projection (4) présente une courbure, l'épaisseur de la lentille de projection (4) diminue dans le sens inverse au sens de projection.

14. Dispositif (2) selon l'une des revendications 1 à 13, **caractérisé en ce que** selon un plan horizontal dans le sens normal de montage, l'inclinaison α entre la normale (30) au dioptre de sortie (24) de la lentille de projection (4) et la direction de projection augmente en direction d'au moins une extrémité de la lentille de projection (4).

15. Bloc optique pour projecteur de véhicule automobile comprenant un dispositif d'éclairage à bandes, **caractérisé en ce que** ledit dispositif (2) est conforme à l'une des revendications 1 à 14.

## Patentansprüche

1. Bandförmige Beleuchtungsvorrichtung (2) für einen Kraftfahrzeugscheinwerfer, welche umfasst:
- ein primäres optisches Element (6), das mit Mitteln zur Bildung (14) von Pixeln, die dazu bestimmt sind, mit einer primären Lichtquelle (12) zusammenzuwirken, und mit einem Austrittsdiopter (16) versehen ist;
- eine Projektionslinse (4);
wobei die Vorrichtung (2) derart gestaltet ist, dass sie Licht, das in die Mittel zur Bildung (14) von Pixeln eintritt und über die Projektionslinse (4) austritt, in der Form eines Lichtpixels (34) projiziert, als ein Lichtband;
wobei die Vorrichtung außerdem eine Zwischenlinse (8) umfasst, welche zwischen dem Austrittsdiopter (16) des primären optischen Elements (6) und der Projektionslinse (4) angeordnet ist und welche so gestaltet ist, dass sie die von dem Austrittsdiopter (16) des primären optischen Elements (8) ausgehende Strahlung auf die Projektionslinse (4) konzentriert,
wobei die Vorrichtung **dadurch gekennzeichnet ist, dass** die Zwischenlinse in der normalen Montagerichtung einen reellen Brennpunkt umfasst und ebenso hoch oder höher als die Projektionslinse (4) ist, oder einen virtuellen Brennpunkt umfasst und weniger hoch wie die Projektionslinse (4) ist.

2. Vorrichtung (2) nach Anspruch 1, **dadurch gekennzeichnet, dass** das Austrittsdiopter (16) des primären optischen Elements (6) im Wesentlichen sphärisch ist und die Mittel zur Bildung von Pixeln wenigstens einen Lichtleiter (14) umfassen, der ein rechteckiges Profil quer zur Beleuchtungsrichtung der Vorrichtung (2) aufweist.

3. Vorrichtung (2) nach einem der Ansprüche 1 bis 2, **dadurch gekennzeichnet, dass** in der normalen Montagerichtung die Zwischenlinse (8) ein Eintrittsdiopter (18) mit einem konvexen Profil in einer horizontalen Ebene und eventuell einem konkaven Profil in einer vertikalen Ebene umfasst.

4. Vorrichtung (2) nach einem der Ansprüche 1 bis 3, **dadurch gekennzeichnet, dass** in der normalen Montagerichtung die Zwischenlinse (8) ein Austrittsdiopter (20) mit einem konvexen Profil in einer vertikalen Ebene und eventuell in einer horizontalen Ebene umfasst.

5. Vorrichtung (2) nach einem der Ansprüche 1 bis 4, **dadurch gekennzeichnet, dass** das primäre optische Element (6) mehrere Lichtleiter (14) umfasst, die jeweils dazu bestimmt sind, mit einer primären Lichtquelle (12) zusammenzuwirken, wobei die Vorrichtung (2) derart gestaltet ist, dass sie mehrere Lichtpixel (34) projiziert, insbesondere mehrere parallele Lichtbänder, welche jeweils einer der primären Lichtquellen (12) entsprechen.

6. Vorrichtung (2) nach Anspruch 5, **dadurch gekennzeichnet, dass** sie wenigstens eine primäre Lichtquelle (12) umfasst, insbesondere eine Leuchtdiode und/oder einen Laser, wobei jede Quelle einem Lichtleiter (14) zugeordnet ist.

7. Vorrichtung (2) nach einem der Ansprüche 1 bis 6, **dadurch gekennzeichnet, dass** in einer vertikalen Ebene in der normalen Montagerichtung die Projektionslinse (4) ein Eintrittsdiopter (22) mit einem konkaven oder ebenen Profil und ein Austrittsdiopter (24) mit einem konvexen Profil umfasst.

8. Vorrichtung (2) nach einem der Ansprüche 1 bis 7, **dadurch gekennzeichnet, dass** in einer vertikalen Ebene in der normalen Montagerichtung die Projektionslinse (4) ein Profil einer divergenten Linse aufweist.

9. Vorrichtung (2) nach einem der Ansprüche 1 bis 8, **dadurch gekennzeichnet, dass** sie mehrere primäre optische Elemente (6) und mehrere Zwischenlinsen (4), die jeweils einem primären optischen Element (6) zugeordnet und zwischen der Projektionslinse (4) und einem zugeordneten primären optischen Element angeordnet sind, umfasst, wobei die Projektionslinse ein durchgehendes Austrittsdiopter entlang der Zwischenlinsen (8) aufweist.

10. Vorrichtung (2) nach Anspruch 9, **dadurch gekennzeichnet, dass** in einer horizontalen Ebene in der normalen Montagerichtung die Zuordnung eines primären optischen Elements (6) und einer Zwischenlinse (8) ein Modul mit einer optischen Achse (32) bildet und die Vorrichtung (2) wenigstens drei aufeinander folgende Module umfasst, deren optische Achsen (32) in Bezug auf die Normale (30) zu dem Austrittsdiopter (24) der Projektionslinse (4) um einen Winkel β zwischen -2° und -10°, um einen Winkel β von 0° bzw. um einen Winkel β zwischen 2° und 10° geneigt sind.

11. Vorrichtung (2) nach Anspruch 9, **dadurch gekennzeichnet, dass** in einer horizontalen Ebene in der normalen Montagerichtung die Zuordnung eines primären optischen Elements (6) und einer Zwischenlinse (8) ein Modul mit einer optischen Achse (32) bildet und die Vorrichtung (2) wenigstens drei aufeinander folgende Module umfasst, deren optische Achsen (32) in Bezug auf die Normale (30) zu dem Austrittsdiopter (24) der Projektionslinse (4) um einen Winkel β von 0°, um einen Winkel β zwischen 2° und 10 bzw. um einen Winkel β zwischen 5° und 18° geneigt sind.

12. Vorrichtung (2) nach einem der Ansprüche 9 bis 11, **dadurch gekennzeichnet, dass** sie wenigstens drei primäre optische Elemente (6) umfasst, die jeweils Mitteln zur Bildung (14) von Pixeln ausgestattet sind, und in einer horizontalen Ebene in der normalen Montagerichtung das Austrittsdiopter (24) der Projektionslinse (4) eine konvexe Krümmung mit einem Krümmungsradius aufweist, der kleiner als 400 mm, vorzugsweise kleiner oder gleich 150 mm ist.

13. Vorrichtung (2) nach einem der Ansprüche 1 bis 12, **dadurch gekennzeichnet, dass** in einer horizontalen Ebene in der normalen Montagerichtung das Austrittsdiopter (24) der Projektionslinse (4) eine Krümmung aufweist und die Dicke der Projektionslinse (4) in der zur Projektionsrichtung umgekehrten Richtung abnimmt.

14. Vorrichtung (2) nach einem der Ansprüche 1 bis 13, **dadurch gekennzeichnet, dass** in einer horizontalen Ebene in der normalen Montagerichtung die Neigung α zwischen der Normalen (30) zu dem Austrittsdiopter (24) der Projektionslinse (4) und der Projektionsrichtung in Richtung wenigstens eines Endes der Projektionslinse (4) zunimmt.

15. Optischer Block für einen Kraftfahrzeugscheinwerfer, der eine bandförmige Beleuchtungsvorrichtung umfasst, **dadurch gekennzeichnet, dass** diese Vorrichtung (2) mit einem der Ansprüche 1 bis 14 konform ist.

## Claims

1. Lighting device (2) generating stripe segmented beam for a motor-vehicle headlamp, said lighting device comprising:
- a primary optical element (6) equipped with pixel-forming means (14) and having an exit refracting surface (16), said element being intended to interact with a primary light source (12); and
- a projecting lens (4);
the device (2) being configured so as to project light entering into the pixel-forming means (14) and exiting via the projecting lens (4) in the form of a luminous pixel (34), i.e. in a form such as the form of a luminous strip;
the device furthermore comprising
an intermediate lens (8) that is placed between the exit refracting surface (16) of the primary optical element (6) and the projecting lens (4), and that is configured so as to concentrate the radiation issued from the exit refracting surface (16) of the primary optical element (8) onto the projecting lens (4), the device being **characterized in that** the intermediate lens (8), in the normal mounting order the intermediate lens (8), comprises a real focal point and is at the same height or is of greater height than the projecting lens (4), or the intermediate lens (8) comprises a virtual focal point and is of lesser height than the projecting lens (4).

2. Device (2) according to Claim 1, **characterized in that** the exit refracting surface (16) of the primary optical element (6) is generally spherical, and the pixel-forming means comprise at least one light guide (14) having a rectangular profile transversely to the lighting direction of the device (2).

3. Device (2) according to one of Claims 1 to 2, **characterized in that** in the normal mounting order the intermediate lens (8) comprises an entrance refracting surface (18) with a profile that is convex in a horizontal plane, and optionally a profile that is concave in a vertical plane.

4. Device (2) according to one of Claims 1 to 3, **characterized in that** in the normal mounting order the intermediate lens (8) comprises an exit refracting surface (20) with a profile that is convex in a vertical plane, and optionally in a horizontal plane.

5. Device (2) according to one of Claims 1 to 4, **characterized in that** the primary optical element (6) comprises a plurality of light guides (14), each intended to interact with a primary light source (12), the device (2) being configured so as to project a plurality of luminous pixels (34) and in particular a plurality of parallel luminous strips, each corresponding to one of the primary light sources (12).

6. Device (2) according to Claim 5, **characterized in that** it comprises at least one primary light source (12) and in particular a light-emitting diode and/or a laser, each source being associated with a light guide (14).

7. Device (2) according to one of Claims 1 to 6, **characterized in that**, in a plane that is vertical, in the normal mounting order, the projecting lens (4) comprises an entrance refracting surface (22) with a profile that is concave or planar and an exit refracting surface (24) with a convex profile.

8. Device (2) according to one of Claims 1 to 7, **characterized in that**, in a plane that is vertical, in the normal mounting order, the projecting lens (4) has a divergent-lens profile.

9. Device (2) according to one of Claims 1 to 8, **characterized in that** it comprises a plurality of primary optical elements (6) and a plurality of intermediate lenses (4), each intermediate lens being associated with a primary optical element (6) and placed between the projecting lens (4) and an associated primary optical element, the projecting lens having an exit refracting surface that is continuous along the intermediate lenses (8) .

10. Device (2) according to Claim 9, **characterized in that**, in a plane that is horizontal, in the normal mounting order, the association of a primary optical element (6) and an intermediate lens (8) forms a module with an optical axis (32), the device (2) comprising at least three consecutive modules the optical axes (32) of which are inclined with respect to the normal (30) to the exit refracting surface (24) of the projecting lens (4) by an angle β comprised between -2° and -10°, an angle β equal to 0°, and an angle β comprised between 2° and 10°, respectively.

11. Device (2) according to Claim 9, **characterized in that**, in a plane that is horizontal, in the normal mounting order, the association of a primary optical element (6) and an intermediate lens (8) forms a module with an optical axis (32), the device (2) comprising at least three consecutive modules the optical axes (32) of which are inclined with respect to the normal (30) to the exit refracting surface (24) of the projecting lens (4) by an angle β equal to 0°, an angle β comprised between 2° and 10°, and an angle β comprised between 5° and 18°, respectively.

12. Device (2) according to one of Claims 9 to 11, **characterized in that** it comprises at least three primary optical elements (6) each equipped with pixel-forming means (14) and, in a plane that is horizontal, in the normal mounting order, the exit refracting surface (24) of the projecting lens (4) has a convex curvature of radius of curvature smaller than 400 mm and preferably smaller than or equal to 150 mm.

13. Device (2) according to one of Claims 1 to 12, **characterized in that**, in a plane that is horizontal, in the normal mounting order, the exit refracting surface (24) of the projecting lens (4) has a curvature, the thickness of the projecting lens (4) decreasing in the opposite direction to the projection direction.

14. Device (2) according to one of Claims 1 to 13, **characterized in that**, in a plane that is horizontal, in the normal mounting order, the inclination α between the normal (30) to the exit refracting surface (24) of the projecting lens (4) and the projection direction increases in the direction of at least one end of the projecting lens (4).

15. Optical unit for a motor-vehicle headlamp, said unit comprising a device generating stripe segmented beam, **characterized in that** said device (2) is according to one of Claims 1 to 14.
